Europäisches Patentamt

European Patent Office

Office européen des brevets

(11) Veröffentlichungsnummer: **0 202 664**
**A2**

(12) **EUROPÄISCHE PATENTANMELDUNG**

(21) Anmeldenummer: **86106876.5**

(22) Anmeldetag: **21.05.86**

(51) Int. Cl.⁴: **B 01 D 53/34**

(30) Priorität: **24.05.85 DE 3518704**

(43) Veröffentlichungstag der Anmeldung:
**26.11.86 Patentblatt 86/48**

(84) Benannte Vertragsstaaten:
**AT BE CH DE FR GB IT LI LU NL SE**

(71) Anmelder: **Weber, Ekkehard**
**Amselweg 6**
**D-4300 Essen 17(DE)**

(72) Erfinder: **Weber, Ekkehard**
**Amselweg 6**
**D-4300 Essen 17(DE)**

(72) Erfinder: **Hübner, Kurt**
**Essener Str. 68a**
**D-4320 Hattingen 16(DE)**

(74) Vertreter: **Spalthoff, Adolf, Dipl.-Ing.**
**Pelmanstrasse 31 P.O. Box 34 02 20**
**D-4300 Essen 1(DE)**

(54) Verfahren zur reduktiven Abtrennung von Stickoxiden.

㉗ Die Erfindung betrifft ein Verfahren zur reduktiven $NO_x$-Absorption, bei dem die Regeneration einer Eisen (II) -ionenhaltigen Waschflüssigkeit mit Hydrazin, Hydrazinsalzen, Hydrazinhydrat sowie mit Hydrochinon durchgeführt wird. Dabei ist eine Reduktion auch bei der Reinigung von Gasen möglich, deren Gehalt an $SO_2$ allein nicht ausreicht, um das an Fe (II) gebundene NO zu reduzieren.

EP 0 202 664 A2

Croydon Printing Company Ltd.

## VERFAHREN ZUR REDUKTIVEN ABTRENNUNG VON STICKOXIDEN

Die Erfindung betrifft ein Verfahren zur Entfernung von Stickoxiden aus einem diese Gase enthaltenden Abgas, insbesondere Rauchgas einer Feuerung, bei dem die zu reinigenden Gase mit einer Waschflüssigkeit in Kontakt gebracht werden, die reduzierend wirkt und einen Abbau der Stickoxide zu elementarem Stickstoff oder Distickstoffmonoxid erlaubt.

Die Abgase einer Reihe industrieller Prozesse enthalten Stickoxide, die soweit als möglich aus ihnen entfernt werden sollen. Dies gilt zum Beispiel für die Rauchgase fossilbefeuerter Kraftwerksanlagen sowie für Müllverbrennungen und Kleinfeuerungen.

Die Rauchgase bestehen dabei zumeist zu über 95 % aus Stickstoffmonoxid, das durch die meisten der üblichen Waschflüssigkeiten kaum absorptiv gebunden wird. Es ist aber bekannt, daß wäßrige Lösungen von zweiwertigen Eisenionen insbesondere bei gleichzeitiger Anwesenheit von Komplexbildnern wie Ethylendiamintetraessigsäure oder Nitrilotriessigsäure sowie deren Salzen in der Lage sind, Stickstoffmonoxid aufzunehmen. Bei der Verwendung derartiger Waschflüssigkeiten lassen sich bei Einhaltung der Randbedingungen Stickoxide und Schwefeldioxid simultan abscheiden. Das Schwefeldioxid wirkt dabei nach seiner Einbindung in Form von Sulfit oder Hydrogensulfitionen an die Waschflüssigkeit als Reduktionsmittel und reduziert das zunächst an die Fe (II)-Ionen gebundene Stickstoffmonoxid zu gasförmigem Stickstoff oder Distickstoffmonoxid, wobei gleichzeitig das Sulfit bzw. Hydrogensulfition zum Sulfation oxidiert wird. Nach der Stöchiometrie dieses Reduktionsschrittes wird je Molekül Stickstoffmonoxid ein Molekül Schwefeldioxid benötigt. Da technische Gase im allgemeinen aber außer Stickstoffmonoxid noch weitere Komponenten enthalten, die oxidativ wirken können, wie beispielsweise Sauerstoff, ist der Reduktionsprozeß im allgemeinen mit einem sehr viel größeren Schwefeldioxidbedarf verbunden. Im allgemeinen wird zumeist mehr als das zwei- oder dreifache molare Verhältnis von Schwefeldioxid zu Stickstoffmonoxid im zu reinigenden Gas benötigt. Diese Voraussetzungen sind aber bei der Verfeuerung von schwefelarmen Brennstoffen bei gleichzeitiger Anwesenheit von hohen Verbrennungstemperaturen, wie sie beispielsweise bei schmelzkammerbefeuerten Kraftwerken vorliegen, oft nicht einzuhalten. Reduktive Verfahren dieser Art sind außerdem nicht anwendbar, wenn überhaupt kein Schwefeldioxid im zu reinigenden Gas vorhanden ist.

Es ist daher die Aufgabe der vorliegenden Erfindung, ein Verfahren der vorstehend genannten Art zu schaffen, bei dem die Reduktion der absorptiv gebundenen Stickoxide stattfinden kann, ohne daß im Rauchgas ein Überschuß von Schwefeldioxid oder auch Schwefeldioxid überhaupt vorhanden sein muß.

Diese Aufgabe wird dadurch gelöst, daß der Waschflüssigkeit Hydrazin und/oder Hydrazinhydrat und/oder ein Hydrazinsalz zugesetzt wird, das eine Reduktion des absorbierten Stickstoffmonoxids erlaubt, ohne daß Folgeprodukte entstehen, die eine weitere Aufbereitung der Waschflüssigkeit oder des gereinigten Gases erfordern.

Die Verbindungen können dabei entweder der Waschflüssigkeit kontinuierlich oder diskontinuierlich während des Kontaktes mit dem zu reinigenden Gas zugegeben werden. Es ist aber auch möglich, kontinuierlich oder diskontinuierlich die Aufgabe vor oder nach erfolgtem Kontakt zwischen Gas und Waschflüssigkeit vorzunehmen. Ein besonderes Merkmal des erfindungsgemäßen Verfahrens ist, daß auch nach längerem Stillstand oxidierte Waschflüssigkeiten wieder in einen aufnahmefähigen Zustand überführt werden können, da die erfindungsgemäßen Reduktionsmittel in
der Lage sind, nicht nur das an die Fe (II)-Ionen gebundene NO zu reduzieren, sondern auch oxidierte Fe (III)
-Ionen wieder in Fe (II)-Ionen zu überführen.

Die Wirksamkeit der angegebenen Reduktionsmittel, insbesondere auch mit dem Zusatz von Hydrochinon als Oxidationsinhibitor, wird durch die folgenden Beispiele deutlich.

Beispiele:

Für die experimentelle Untersuchung zur reduktiven $NO_x$-
-Entfernung aus Gasgemischen wurde ein synthetisches
Gasgemisch verwendet, das wie folgt zusammengesetzt war:

$$5 \text{ Vol\% } O_2$$
$$2000 \text{ vpm NO}$$
$$1000 \text{ vpm } SO_2$$
$$95 \text{ Vol\% } N_2.$$

Die Absorption des NO aus dem Gasgemisch erfolgte in
einem Blasensäulenreaktor mit 100 $cm^3$ einer wäßrigen
Waschflüssigkeit mit 0,05 mol Tetranatriumsalz der Ethylendiamintetraessigsäure und 0,05 mol $FeSO_4$, die durch
Zugabe von Schwefelsäure und Natronlauge auf einen pH-Wert
von 7 eingestellt war, bei einer Temperatur von 40°C.

Mit dieser Waschflüssigkeit konnte bei einem Gasvolumenstrom von 5o l/h ein Abscheidegrad von über 9o % für 9o min eingehalten werden. Danach trat eine plötzliche Minderung auf weniger als 3o % ein.

Beispiel 1:  Durch Zugabe von 5oo mg Hydrazin in wäßriger Lösung konnte das alte Absorptionsverhalten wiederhergestellt werden, wenn ein Zeitraum von 2o min zur Regeneration der Waschflüssigkeit zur Verfügung gestellt wurde.

Beispiel 2:  Nach einer Regenerationszeit von 5 min betrug die Zeitdauer für 9o %ige Abscheidung bei sonst gleichen Bedingungen nur ca. 3o min.

Beispiel 3:  Nach Zugabe von 5oo mg Hydrazin und 1o mg Hydrochinon konnte die Lösung innerhalb von 5 min voll regeneriert werden.

Beispiel 4:  Nach Zugabe von 1 g Hydrazinchlorid und 1o mg Hydrochinon wurde bei 5 minütiger Regeneration eine Zeitdauer von ca. 8o min für die 9o %ige Abscheidung erreicht.

Beispiel 5:  Hydrazinsulfat erlaubte bei sonst gleichen Bedingungen wie in Beispiel 4 eine 9o %ige Abscheidung über 5o min.

## VERFAHREN ZUR REDUKTIVEN ABTRENNUNG VON STICKOXIDEN

PATENTANSPRÜCHE

1. Verfahren zur Entfernung von Stickoxiden mit wäßrigen Lösungen, die Eisen (II)-Ionen enthalten, aus einem stickoxidhaltigen Abgas, insbesondere Rauchgas einer Feuerung, dadurch gekennzeichnet, daß die Lösung mindestens eine der folgenden Verbindungen in gelöster Form enthält, oder daß mindestens eine der folgenden Verbindungen diskontinuierlich oder kontinuierlich vor, während oder nach dem Kontakt zwischen Gas und Flüssigkeit letzterer zugegeben wird: Hydrazin, Hydrazinsalze, Hydrazinhydrat.

2. Verfahren nach Anspruch 1, dadurch g e k e n n - z e i c h n e t, daß es sich bei den Hydrazinsalzen um mindestens eine der folgenden Verbindungen handelt: Hydrazinchlorid, Hydrazinsulfat, Hydrazinacetat, Hydrazinformiat.

3. Verfahren nach den Ansprüchen 1 und 2, dadurch g e k e n n z e i c h n e t, daß Mischungen beliebiger Konzentration und Zusammensetzung der genannten Verbindungen eingesetzt werden.

4. Verfahren nach den Ansprüchen 1 bis 3, dadurch g e k e n n z e i c h n e t, daß zusätzlich zu Hydrazin, und/oder Hydrazinsalzen, und/oder Hydrazinhydrat als weiteres Reduktionsmittel Hydrochinon der Waschflüssigkeit zugegeben wird.